Europäisches Patentamt

European Patent Office

Office européen des brevets

(11) Publication number: **0 227 366**
**A2**

## (12) EUROPEAN PATENT APPLICATION

(21) Application number: 86309539.4

(51) Int. Cl.⁴: **G02B 6/10**

(22) Date of filing: 08.12.86

(30) Priority: 11.12.85 GB 8530506

(43) Date of publication of application:
01.07.87 Bulletin 87/27

(84) Designated Contracting States:
AT BE CH DE ES FR GB GR IT LI LU NL SE

(71) Applicant: THE UNIVERSITY OF
SOUTHAMPTON
The University Highfield
Southampton Hampshire SO9 5NH(GB)

(72) Inventor: Hussey, Conleth Denis
22 Kingsfold Avenue Townhill Park
Southampton SO2 2PZ(GB)
Inventor: Fujii, Yoichi
5-35 Heiwadi-4
Nagareyama Chiba 270-01(JP)
Inventor: Birch, Robin
4 Clifton Gardens
West End Southampton SO3 3DA(GB)

(74) Representative: Harland, Linda Jane et al
c/o Reddie & Grose 16 Theobalds Road
London WC1X 8PL(GB)

(54) Optical fibres.

(57) A single mode optical fibre having a circular birefringence comprises a cladding (II) surrounding a light-guiding central core region (I0) which is amizuthally inhomogeneous (I3, I5). The inhomogeneity provides no significant linear birefringence, and the core region (I0), is twisted to introduce a corresponding twist to the inhomgeneity. The cladding (II) has a radius which is much greater than that of the cylindrical envelope (20) parallel to the fibre axis which just encloses the twisted inhomogeneity.

FIG. 2a          FIG. 2b

## OPTICAL FIBRES

This invention relates to single mode optical fibres having circular birefringence.

A typical optical fibre is made of glass and comprises a small-diameter central light-guiding core surrounded by a cladding of much greater diameter, the cladding itself generally being surrounded in turn by a protective jacket of plastics material. A greatly enlarged cross-section of a known fibre is shown in figure I, where the core is shown at IO surrounded by the cladding II, the whole being protected by a plastics jacket I2. The cladding II is usually of very pure silica (silicon dioxide) while the core IO is made of silica doped with, for example, germanium. This gives the core IO a slightly higher refractive index than the cladding II, for example I.460 for the core compared to I.458 for the cladding.

In a single mode fibre the core IO has a diameter of typically 2 -5 $\mu$m (I $\mu$m = I millionth of I meter) while the international standard diameter for the cladding is I25 $\mu$m (I/8th of I mm) although fibres may be made with a lesser diameter.

As is well known, light is propogated along the fibre by total internal reflection at the interface between the core IO and the cladding II.

It has long been attempted to construct a satisfactory optical fibre which has circular birefringence; i.e. the fibre will rotate polarized light propagating along its axis. Employing the Faraday effect, such fibres may be used as a cheap alternative to expensive current transformers for current measurement on the national grid network. Other uses are as optical fibre sensors and other optical fibre sensors and other optical fibre components (e.g. couplers), and in optical fibre communications.

A measure of the circular birefringence of a fibre is the length along the fibre for which a complete rotation of polarization through 360 degrees takes place. For a fibre to have much practical use this rotation length should be less than 2000 mm, while rotation lengths of less than 20 mm are preferred.

In the past, circular birefringence has been introduced into fibres by:

(i) Twisting the fibre to introduce torsional stress. In this case the amount of birefringence is limited by the strength of the fibre and rotation lengths tend to be greater than 2000 mm.

(ii) Exploiting the optical rotation which occurs when light is constrained to follow a helical path. Typically the "core", now at or near the outside surface of the fibre, is twisted into a helix several hundred $\mu$m in diameter, so that the fibre must have at least this diameter. The result is that the fibre does not conform dimensionally to international standards. Also, the light emerges from the fibre at a pronounced skew angle to the fibre optic axis so that the launching and extraction of light is not straightforward.

It is an object of the present invention to provide a new circularly birefringent optical fibre in which the disadvantages of these prior techniques are overcome or at least substantially reduced.

Accordingly, the present invention provides a single mode optical fibre having circular birefringence, the fibre comprising a cladding surrounding a light-guiding central core which is azimuthally inhomogeneous, the inhomogeneity providing no significant linear birefringence, and the core being twisted to introduce a corresponding twist to the inhomogeneity, the cladding having a radius much greater than that of the cylindrical envelope parallel to the fibre axis which just encloses the twisted inhomogeneity.

Preferably the radius of the cylindrical envelope of the twisted inhomogeneity is IO m or less, and the radius of the cladding is at least 3 times, and preferably at least 5 times, that of the cylindrical envelope of the twisted inhomogeneity.

In particular, the diameter of the cladding may be from 60 to I50 $\mu$m, preferably from I00 to I50 $\mu$m, and most preferably approximately I25 $\mu$m to conform to international standards. The rotation length of the inhomogeneity is preferably 20 $\mu$m or less.

The inhomogeneity may be provided by at least one lobe in the central core having a refractive index higher than that of the immediately adjacent material, the twisting of the core causing the lobe(s) to assume a spiral shape along the fibre. There may be a plurality of lobes arranges symmetrically about the longitudinal axis of the fibre.

Except for the lobe(s), the refractive index of the core may be higher, lower or the same as that of the surrounding cladding, although it is preferred for best results that the refractive index of the core material immediately adjacent the lobe(s) be less than that of the cladding.

The azimuthally inhomogeneous core and the surrounding cladding may be made of silica, either pure or appropriately doped, e.g. with Ge, to provide the required refractive indices. Optical fibres according to the invention may be manufactured by the conventional so-called "rod in tube" technique wherein a pre-form is assembled using multiple rods, followed by heat softening and drawing and twisting. Suitable pre-forms may also be made using gas phase etching techniques. Where the Application of the fibre is magnetic field sensing based on the Faraday Effect, the core may be doped with Pb or Nd to enhance the Faraday Effect.

It will be appreciated that in the present invention the azimuthally inhomogeneous central core may be physically delimited or notionally delimited. The core is physically delimited when the material thereof immediately adjacent the lobe(s) differs in refractive index from the cladding.

However, when, except for the lobe(s), the core is of the same material and has the same refractive index as the surrounding cladding, it is effectively defined by, and is to be regarded for the purposes of the present specification as, the aforesaid cylindrical envelope parallel to the fibre axis which just encloses the twisted inhomogeneity, e.g. the spiral lobe(s). In both cases, however, the geometrical extent of the core is defined.

Embodiments of the present invention will now be described, by way of example, with reference to the accompanying drawings, wherein:

Figure I, previously described, is a greatly enlarged cross-sectional view of a conventional optical fibre.

Figure 2a shows a similarly enlarged cross-sectional view of an optical fibre according to a first embodiment of the invention, and Figure 2b shows a yet further enlarged view of the core of the fibre shown in Figure 2a,

Figures 3 to 6 are views to the same scale as Figure 2b of the cores of four further embodiments of optical fibres according to the invention, and

Figure 7 is a graph useful in explaining the invention.

The present invention exploits the fact that the twisting of an optically anisotropic medium (a medium which has different refractive indices for different directions of polarisation) along the direction of light propagation can result in a rotation of polarization at a rate equal to the twist rate -see P McIntyre & A W Snyder, "Light propagation in twisted anisotropic media: Application to photoreceptor", Journal of the Optical Society of America, Vol. 68, No. 2, pp. 149-157, 1978.

A crucial step in introducing this effect into an optical fibre is the realisation that if the core of the fibre is made azimuthally inhomogeneous (i.e. the refractive index varies with angle measured about the axis) then a circular birefringence can be introduced when such a structure is twisted about the longitudinal axis of the fibre.

In order to introduce substantially pure circular birefringence (i.e. with no significant linear birefringence) it is necessary to have certain symmetries within the core. This is best illustrated with reference to the embodiments of the invention, now to be described.

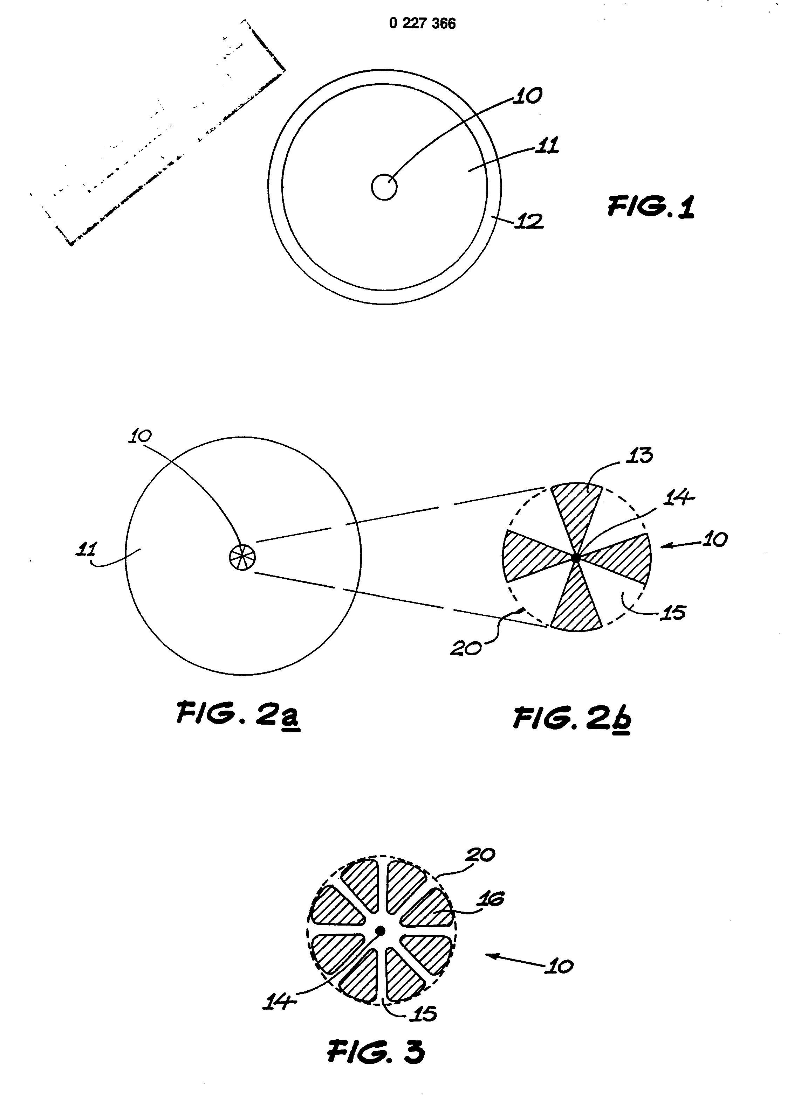

Referring to Figures 2a and 2b, the optical fibre there shown in cross-section has a central core l0 surrounded by a cladding II (no jacket is shown). The core l0 has a radius of l0 μm or less, and the diameter of the cladding may be from I00 to I50 μm and is preferably about I25 μm to conform to international standards. These same dimensions apply to all the examples of the invention to be described. The reason for showing the periphery 20 of the core l0 as the dashed line in this and the following figures will be discussed below.

The core l0 comprises four segments or lobes I3 symmetrically disposed about the centre axis I4 of the core. The lobes I3 are shaded to illustrate that they have a refractive index slightly higher than both the immediately adjacent core material I5 and the cladding II.

The core l0 shown in Figure 3 is similar to that of Figure 2, in that it has a number of segments or lobes I6 symmetrically disposed about the centre axis I4 of the core. However, here they are eight in number.

In these two examples it is assumed that the shaded lobes I3 or I6 of higher refractive index are optically coupled, in which case it is necessary, in order to eliminate linear birefringence, that the overall core structure have at least two equal mirror symmetries at right angles to each other.

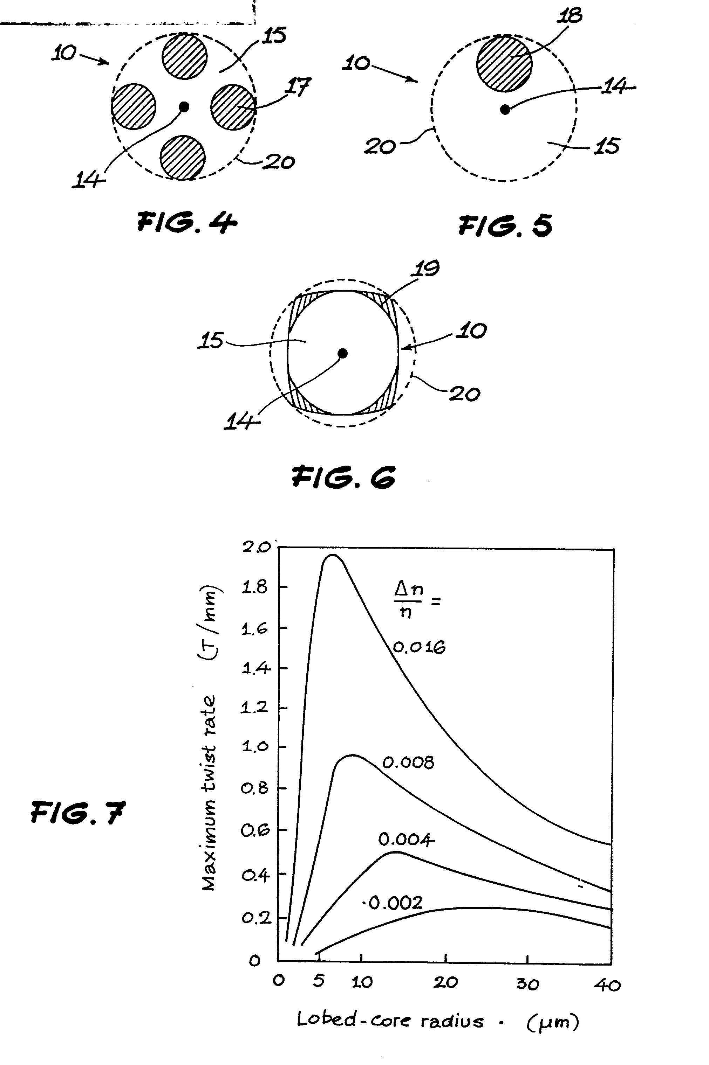

However, if the lobes were optically isolated from each other (uncoupled), then it would be sufficient for each lobe itself to have at least two equal mirror symmetries at right angles to each other, irrespective of any symmetry in the overall structure. This is true of the core shown in Figure 4 which comprises four circular lobes I7 symmetrically disposed about the axis I4 of the core l0.

Since, in a multi-lobed structure such as that shown in Figure 4 where the lobes are optically isolated, each lobe will in itself cause optical rotation, a single lobe with at least two equal mirror symmetries at right angles to each other will also provide optical rotation. An example of such a structure is shown in Figure 5, wherein a single circular lobe I8 is provided offset from the axis I4 of the core l0.

A further example of a core suitable for the invention is shown in Figure 6. In this case the core l0 is generally square with each corner lobe I9 comprising a material of higher refractive index than the rest of the core material 15. In this case it is assumed that the lobes 19 are optically coupled, so the overall structure has two equal mirror symmetries at right angles to each other.

Those skilled in the art will recognise that the symmetry conditions discussed above may be generalised by stating that so-called "Cos2θ Symmetry" must not be present in the overall core structure where there are multiple lobes optically coupled together, nor must it be present in individual lobe(s) if these are uncoupled.

In the above examples the lobes or areas of higher refractive index were offset to one side of the axis of the core. This is not necessarily the case for single lobe cores provided that Cos2θ symmetry is avoided and, of course, the core is azimuthally inhomogeneous.

It is to be understood that in the above examples the core is twisted at a uniform rate during the formation of the optical fibre from the pre-form, so that the lobe(s) assume a spiral shape along the fibre. The technology for doing this is known. The cylindrical envelope parallel to the axis of the fibre which just touches (or in other words just contains) the outer edges of the spiral-shaped lobe(s) is shown in cross-section as a dashed circle 20 in each of Figures 2b to 6. Where the core material 15 is not the same as the material of the cladding 11, the dashed circle 20 represents a real physical boundary.

However, where the cladding 11 and the core material 15 is the same, the boundry is notional. It is the radius of the circle 20, whether coincident with a real physical boundary or being a notional boundary, which is important for the invention. As mentioned above, this radius should be much less than that of the cladding 11, and preferably less than 10 μm. It is to be noted that in Figure 6 the circle 20 can never represent a real physical boundary.

A theoretical analysis shows that the optical rotation induced by fibres according to the invention is given by the twist rate only under certain conditions. For a given refractive index difference between a lobe and the adjacent core material there is a maximum allowable twist rate and an optimum envelope radius.

Figure 7 is a graph showing the maximum obtainable twist rate in turns (T) per mm as a function of the lobed-core (envelope) radius in μm and the refractive index difference between the lobe(s) and the surrounding core region material expressed as a fraction. In general it will be seen that higher twist rates require a larger refractive index difference and/or a smaller radius. It should be made clear that Figure 7 is obtained by theoretical analysis, and is not to be interpreted strictly. However, we have found that it does give guidance as to the general level of performance obtainable by use of the invention.

For example, the graph indicates that particularly high twist rates (and corresponding rotation lengths) are obtainable for a radius of 10 μm or less, particularly at the larger refractive index differences, and even the lowest curve indicates that a twist rate of about one full turn in 10 mm is obtainable at a radius of 10 μm. We have verified this in general terms. For example, one specific example of an optical fibre having a core of the kind shown in Figure 5, but with the core area 15 being the same material as the surrounding cladding, had the following characteristics:

Radius of core 10: 10 μm

Relative refractive index difference bewteen lobe 18 and core area 15 (and cladding): 0.007

Diameter of cladding: 110 μm

Twist Rate: 116 turns/meter

Rotation length obtained: 8.6 mm.

This rotation length is much less than the preferred upper limit of 20 mm referred to in the introduction. The fact that such good rotation lengths are obtainable at such a small core radius - (<10 μm) means that fibres according to the invention may be made to conform to international standards, which is important for their widespread acceptability.

Further advantages are that since the fibre may have the dimensions of standard single mode fibres: (a) the launching and extraction of light is straightforward, (b) standard tools and handling procedures can be used, (c) the splicing of fibres is straightforward, and (d) the loss and bend birefringence are minimal. Also, the fibres are simple and cheap to manufacture since they may use standard techniques.

## Claims

1. A single mode optical fibre having circular birefringence, the fibre comprising a cladding (11) characterised in that the central core region is azimuthally inhomogeneous (13,15) the inhomogeneity providing no significant linear birefringence, and the core region (10) being twisted to introduce a corresponding twist to the inhomogeneity, the cladding (11) having a radius much greater than that of the cylindrical envelope - (20) parallel to the fibre axis which just encloses the twisted inhomogeneity.

2. An optical fibre according to claim 1, wherein the radius of the cylindrical envelope (20) of the twisted inhomogeneity is 10 μm or less.

3. An optical fibre according to claim 1 or 2, wherein the radius of the cladding (11) is at least 3 times, and preferably at least 5 times, that of the cylindrical envelope (20) of the twisted inhomogeneity.

4. An optical fibre according to claim 1, 2 or 3, wherein the diameter of the cladding is from 60 to 150 $\mu$m, and preferably from 100 $\mu$m to 150 $\mu$m.

5. An optical fibre according to claim 4, wherein the diameter of the cladding is approximately 125 $\mu$m.

6. An optical fibre according to any preceding claim, wherein the rotation length introduced by the inhomogeneity is 20 mm or less.

7. An optical fibre according to any preceding claim, wherin the inhomogeneity is provided by at least one lobe (13) in the central core region having a refractive index higher than that of the immediately adjacent material (15), the twisting of the core region causing the lobe(s) (13) to assume a spiral shape along the fibre.

8. An optical fibre according to claim 7, including a plurality of lobes (17) arranged symmetrically about the lonitudinal axis (14) of the said cylindrical envelope (20).

0 227 366

FIG.1

FIG. 2a

FIG. 2b

FIG. 3

**FIG. 4**

**FIG. 5**

**FIG. 6**

**FIG. 7**

Maximum twist rate (T/mm)

$\dfrac{\Delta n}{n} =$

0.016

0.008

0.004

·0.002

Lobed-core radius · (μm)